# EUROPÄISCHE PATENTSCHRIFT

(11) **EP 0 712 675 B1**
(45) Veröffentlichungstag und Bekanntmachung des Hinweises auf die Patenterteilung: **09.02.2000**
(21) Anmeldenummer: 95115736.1
(22) Anmeldetag: 06.10.1995
(51) Int. Cl.: B21D 51/38, B65D 17/50

(54) **Vorrichtung zum Herstellen und Anbringen eines Schutzbezuges bei einer Öffnung in einer Behälterwandlung**
Device for making and attaching of a protecting cladding at an opening in the wall of a container
Dispositif pour manufacture et attachage d'une revêtement de protection à une ouverture dans le paroi d'un récipient

(30) Priorität: 18.11.1994 DE 4441097
(43) Veröffentlichungstag der Anmeldung: 22.05.1996
(73) Patentinhaber: Rüdiger Haaga GmbH, D-78727 Altoberndorf (DE)
(72) Erfinder: Stahlecker, Werner, D-70184 Stuttgart (DE)
(74) Vertreter: Wilhelm & Dauster Patentanwälte European Patent Attorneys

(56) Entgegenhaltungen:
- EP-A- 0 200 877
- CH-A- 253 764
- US-A- 4 526 287

## Beschreibung

Die Erfindung betrifft eine Vorrichtung zum Herstellen und Anbringen eines Schutzbezuges bei einer Öffnung einer Wand für einen Behälter.

In dem US-A-4,397,401 ist ein nietförmiger Schutzbezug beschrieben, der aus zwei bogenartigen Folienstücken hergestellt wird. Die beiden Folienstücke werden der die Öffnung enthaltenden Wand für den Behälter zugeführt. Hierbei wird das eine Folienstück auf die eine Breitseite und das andere Folienstück auf die andere Breitseite der Wand angelegt, wobei die Öffnung der Wand von jedem Folienstück vollständig überdeckt wird. Die Abdeckung der Kante der Öffnung erfolgt dadurch, daß eines der Folienstücke oder beide Folienstücke in die Öffnung hinein umgeformt werden. Die beiden Folienstücke werden im Bereich der Kante miteinander verschmolzen, so daß ein einheitlicher Schutzbezug hergestellt wird. In beide Folienstücke wird eine Öffnung eingebracht, deren Querschnitt etwas kleiner ist als der Querschnitt der ursprünglich vorhandenen, die abzudeckende Schnittkante aufweisenden Öffnung der Behälterwand.

In der nicht vorveröffentlichten DE-A-44 11 925 ist ein nietförmiger Schutzbezug bei einer Öffnung einer Wand für einen Behälter beschrieben, der aus nur einem Folienstück hergestellt ist. Bei einer Ausführungsform wird ein bogenartiges Folienstück an die erste Breitseite der Wand derart angelegt, daß die Öffnung und der hieran angrenzende Randbereich der Wand überdeckt werden. Hierbei kann der die Öffnung der Wand abdeckende Abschnitt des Folienstücks mit einer Öffnung versehen sein, deren Querschnitt kleiner ist als der Querschnitt der Öffnung der Wand. Der die Öffnung der Wand abdeckende Abschnitt des Folienstücks wird sodann in die Öffnung hineingeformt, so daß ein hülsenförmiger Abschnitt des Folienstücks gebildet wird, der bei der zweiten Breitseite der Wand ein Stück weit aus der Öffnung der Wand herausragt. Der aus der Öffnung herausragende Abschnitt des Folienstücks wird sodann zu der zweiten Breitseite hin umgeformt, so daß die nietförmige Gestalt des Folienstücks erhalten wird. Das Folienstück wird an der Wand dauerhaft befestigt und bildet so einen nietförmigen Schutzbezug.

Aus der EP-A-0 676 336, die als nächstliegender Stand der Technik anzusehen ist und einen Stand der Technik nach Artikel 54(3) EPU darstellt, ist implizit bekannt: eine Vorrichtung zum Herstellung und Anbringen eines Schutzbezuges bei einer Öffnung einer Wand für einen Behälter, wobei die Kante der Öffnung und die beiden an sie angrenzenden Randbereiche der beiden Breitseiten der Wand von dem Schutzbezug nietartig überdeckt werden, wobei die Vorrichtung eine Einrichtung zum Anlegen eines bogenartigen Folienstücks an die erste Breitseite der Wand, eine Einrichtung zum Verformen eines die Öffnung der Wand überlappenden Abschnitts des angelegten Folienstücks durch die Öffnung der Wand hindurch, eine Einrichtung zum Verformen eines aus der Öffnung der Wand bei der zweiten Breitseite herausragenden Abschnitts des verformten Folienstücks und eine Einrichtung zum dauerhaften Befestigen des zu einem nietförmigen Schutzbezug verformten Folienstücks aufweist.

Es ist die Aufgabe der Erfindung, eine Vorrichtung dieser Art aufzuzeigen, mit der der nietförmige Schutzbezug aus nur einem Folienstück hergestellt und bei einer Öffnung einer Wand für einen Behälter angebracht werden kann.

Die Aufgabe wird durch die Kombination der Merkmalen nach Anspruch 1 gelöst.

Die Vorrichtung ermöglicht ein einfaches und sicheres Herstellen und Anbringen eines nietförmigen Schutzbezuges ausgehend von einer ebenen Folie. Die ebene Folie kann zweckmäßig in Form eines Bandes vorgelegt werden, bei dem eine Vielzahl von einem Folienstück entsprechenden Abschnitten vorhanden ist, die bei der Vorrichtung von dem Band abgetrennt werden können.

Die Erfindung kann eingesetzt werden bei allen Wänden von Behältern, bei denen verhindert werden soll, daß ein Medium, insbesondere das Füllgut, in die Behälterwand eindringt. Im Bereich der Öffnung ist die Oberfläche der Wand häufig aufgebrochen, insbesondere dann, wenn die Öffnung durch Schneiden oder Stanzen hergestellt ist. Durch das Anbringen des Schutzbezuges kann im Bereich der Kante der Öffnung ein gleichartiger oder ähnlicher Schutz hergestellt werden, wie er auch in den anderen Bereichen des Behälters besteht.

Es kommt nicht darauf an, in welcher von mehreren Wänden des Behälters die Öffnung vorhanden ist oder ob der Behälter aus mehreren Wänden zusammengesetzt wird.

Die mit einem Schutzbezug bei der Öffnung versehene Wand kann zu einem Behälter unterschiedlicher Gestalt verarbeitet werden und beispielsweise einer Maschine zum Herstellen von Behältern vorgelegt werden.

Unter Folie im Sinne der vorliegenden Erfindung wird jedes flächige Material verstanden, das verformbar ist, wobei es auf die Dicke des Materials nicht ankommt. Sofern bei den Einrichtungen zum Verformen keine Wärme eingesetzt wird, genügt es, wenn die Folie kalt verformt werden kann.

Die Wand, bei der der Schutzbezug angebracht werden soll, kann schon bei der Zuführung zu der Vorrichtung mit einer Öffnung versehen sein. Es ist aber auch möglich, bei der Vorrichtung eine Einrichtung vorzusehen, mit der die Öffnung in die Wand eingebracht wird.

Für die Herstellung des Schutzbezuges kann ein nicht durch Öffnungen unterbrochenes Folienstück verwendet werden. Es ist aber auch möglich, ein Folienstück zu verarbeiten, das eine Öffnung enthält. Der Vorrichtung kann dann ein Folienstück, in das eine Öffnung eingebracht ist, zugeführt werden. Es ist stattdessen auch möglich, bei der Vorrichtung eine Einrichtung anzuordnen, mit der eine Öffnung in das Folienstück eingebracht wird. Das Einbringen der Öffnung kann hierbei vor, bei oder nach dem Verformen des Folienstücks erfolgen. Das Vorhandensein einer Öffnung in dem zu verformenden Folienstück kann zweckmäßig sein, wenn nur mechanisch wirkende Einrichtungen zum Verformen eingesetzt werden sollen.

Das Folienstück kann in einem oder in mehreren Arbeitsgängen befestigt werden. Es ist beispielsweise möglich, das Folienstück zugleich mit dem Anlegen bei der ersten Breitseite dauerhaft zu befestigen, anschließend die Verformung des Folienstücks durchzuführen und danach einen verformten Abschnitt des Folienstücks bei der zweiten Breitseite der Wand zu befestigen. Es ist stattdessen auch möglich, das Folienstück erst nach dem Verformen an beiden Breitseiten der Wand und gegebenenfalls zusätzlich bei der Kante der Öffnung zu befestigen.

Die Vorrichtung enthält eine Einrichtung zum vorübergehenden Festhalten des Folienstücks. Diese Einrichtung ist vor allem dann sinnvoll, wenn nicht ein Teil des Folienstücks vor dem Verformen bereits dauerhaft befestigt ist. Durch das vorübergehende Festhalten kann das Folienstück sicher verformt werden, ohne daß es sich durch die Einwirkung der verschiedenen Einrichtungen verschiebt.

Es ist möglich, die zu verarbeitenden Folienstücke jeweils einzeln der Vorrichtung zuzuführen.

Es ist möglich, die verschiedenen Einrichtungen der Vorrichtung in einer einzigen Arbeitsstation oder in mehreren Arbeitsstationen unterzubringen.

In vorteilhafter Ausgestaltung ist die Einrichtung zum Abtrennen eines Folienstücks, die Einrichtung zum Anlegen des Folienstücks, die Einrichtung zum Festhalten des Folienstücks, die Einrichtung zum Verformen des die Öffnung der Wand überlappenden Abschnitts und die Einrichtung zum Verformen des aus der Öffnung herausragenden Abschnitts bei einer Arbeitsstation und die Einrichtung zum Befestigen des zu einem nietförmigen Schutzbezug verformten Folienstücks bei einer anderen Arbeitsstation angeordnet. Die Arbeitsstation zum Befestigen ist hierbei der erstgenannten Arbeitsstation bezüglich des Arbeitsablaufes nachgeordnet.

In vorteilhafter Ausgestaltung enthält die Einrichtung zum Abtrennen eines Folienstücks eine Schnittplatte mit einer der äußeren Kontur des abzutrennenden Folienstücks entsprechenden Ausnehmung und einen der äußeren Kontur des Folienstücks entsprechenden Schnittstempel, der von einer Position außerhalb der Schnittplatte in eine Position innerhalb der Ausnehmung der Schnittplatte verschiebbar ist.

In zweckmäßiger Weiterbildung enthält die Einrichtung zum Anlegen eine Einrichtung zum Befördern des Folienstücks, die in vorteilhafter Weise durch den Schnittstempel gebildet wird, der durch die Ausnehmung der Schnittplatte zu der ersten Breitseite der Wand führbar ist. Die Umfangswand der Ausnehmung kann dann als Führungsfläche für das Folienstück während der Beförderung zu der Wand dienen.

In vorteilhafter Ausgestaltung enthält die Einrichtung zum Verformen des die Öffnung der Wand überlappenden Abschnitts eine Stützplatte mit einer Ausnehmung, deren Kontur der Kontur der Öffnung der Wand wenigstens annähernd entspricht und in die ein Ziehstempel einführbar ist, dessen äußere Kontur der Kontur der Ausnehmung wenigstens annähernd entspricht. Durch die im wesentlichen übereinstimmende Kontur erhält der in die Öffnung hineingeformte Abschnitt des Folienstücks eine der Öffnung angepaßte Form und kann sich gegen die Kante anlegen.

Es ist hierbei zweckmäßig, wenn der Querschnitt des Ziehstempels geringfügig kleiner ist als der Querschnitt der Öffnung der Wand und der Ausnehmung der Stützplatte. Eine solche Abweichung im Querschnitt kann günstig sein, um dem umzuformenden Folienstück zwischen der Kante der Öffnung der Wand und dem Ziehstempel ausreichend Platz zu lassen.

Es kann allerdings auch vorteilhaft sein, den Querschnitt des Ziehstempels nicht kleiner auszubilden als den Querschnitt der Öffnung der Wand, beispielsweise dann, wenn die Wand nachgiebig ist.

In vorteilhafter Ausgestaltung weist der Ziehstempel bei seinem vorderen Ende einen verringerten Querschnitt auf. Hierdurch wird das Umformen des ebenen, überlappenden Abschnitts in die Öffnung hinein begünstigt.

In weiterer vorteilhafter Ausgestaltung ist das vordere Ende des Ziehstempels einer in dem Folienstück angeordneten Öffnung angepaßt. Hierdurch wird das Umformen des ebenen, überlappenden Abschnitts des Folienstücks in die Öffnung der Wand hinein ebenfalls begünstigt. Diese Maßnahme ist vor allem dann zweckmäßig, wenn kalt verformt werden soll.

In vorteilhafter Ausgestaltung ist die Einrichtung zum Festhalten des Folienstücks durch den zu der ersten Breitseite der Wand geführten Schnittstempel und die Stützplatte gebildet. In vorteilhafter Ausgestaltung enthält die Einrichtung zum Verformen des aus der Öffnung der Wand herausragenden Abschnitts des Folienstücks einen Bördelstempel, der in eine Öffnung des genannten Abschnitts des Folienstücks hinein verschiebbar ist und dessen äußere Kontur derart ausgebildet ist, daß der genannte herausragende Abschnitt bei dem Verschieben des Bördelstempels aufgeweitet und zu der zweiten Breitseite umgeformt wird.

Es hierbei günstig, wenn der Bördelstempel an den Ziehstempel anlegbar ist, so daß dieser beim Verschieben des Bördelstempels in der Bewegung mitgeführt wird. Hierdurch wird das Verformen begünstigt, weil der aus der Öffnung herausragende Abschnitt des Folienstücks von dem Ziehstempel auf den Bördelstempel unterbrechungslos übergeht.

In vorteilhafter Weiterbildung entspricht die äußere Kontur des Bördelstempels über einen Längenbereich wenigstens annähernd der Kontur der Öffnung der Wand.

Es ist vorteilhaft, wenn der Bördelstempel einen mit seinem vorderen Ende beginnenden, im wesentlichen axial verlaufenden Längenbereich und eine sich hieran nach außen anschließende Ringfläche mit im wesentlichen radialer Richtungskomponente aufweist. Der im wesentlichen axial verlaufende Längenbereich dringt während der Verschiebebewegung des Bördelstempels in das Innere des im wesentlichen hülsenförmig geformten, aus der Öffnung herausragenden Abschnitts des Folienstücks ein und führt diesen zu der Ringfläche. Die Ringfläche drückt den herausragenden Abschnitt gegen die zweite Breitseite der Wand an.

In vorteilhafter Weiterbildung weist der Bördelstempel wenigstens im einem mittleren Längenbereich einen annähernd gleichbleibenden Querschnitt auf, der geringfügig kleiner ist als der Querschnitt der Öffnung der Wand.

Es ist vorteilhaft, wenn sich an den mittleren Längenbereich des Bördelstempels ein vorderer Längenbereich mit sich zum vorderen Ende des Bördelstempels hin verjüngendem Querschnitt anschließt. Hierdurch wird die Übernahme des hülsenförmigen, aus der Öffnung der Wand herausragenden Abschnitts durch den Bördelstempel erleichtert.

In vorteilhafter Ausgestaltung ist der Bereich des Bördelstempels, bei dem der im wesentlichen axial verlaufende Längenbereich zu der Ringfläche mit radialer Richtungskomponente übergeht, durch eine Umfangsfläche gebildet, die in der Ringfläche eine ringnutartige Vertiefung bildet. Hierdurch wird das Umformen des aus der Öffnung der Wand herausragenden Abschnitts des Folienstücks zu der zweiten Breitseite der Wand begünstigt.

In vorteilhafter Ausgestaltung wird die Stützplatte aus mehreren Teilplatten gebildet, die in radialer Richtung der Ausnehmung der Stützplatte von dem Zentrum der Ausnehmung wegbewegbar sind. Hierdurch kann in einfacher Weise Platz für den Bördelstempel zum Andrücken des Folienstücks gegen die zweite Breitseite der Wand geschaffen werden.

In vorteilhafter Ausgestaltung ist der Schnittstempel als Hülse ausgebildet, in deren Hohlraum der Ziehstempel frei beweglich angeordnet ist.

Weitere Vorteile und Merkmale ergeben sich aus dem zu den Figuren beschriebenen Ausführungsbeispiel.

Es zeigen:
Figur 1 eine schematische Darstellung eines mit der Vorrichtung ausführbaren Verfahrens zur Herstellung und zum Anbringen eines nietförmigen Schutzbezuges,
Figuren 2a bis 2e die einzelnen Arbeitsschritte des in Figur 1 dargestellten Verfahrens,
Figur 3 eine Vorrichtung mit einer ersten und einer zweiten Arbeitsstation zum Herstellen und Anbringen eines nietförmigen Schutzbezuges,
Figuren 4a bis 4d die Arbeitsschritte der in Figur 3 dargestellten ersten Arbeitsstation in vergrößerter Ansicht.

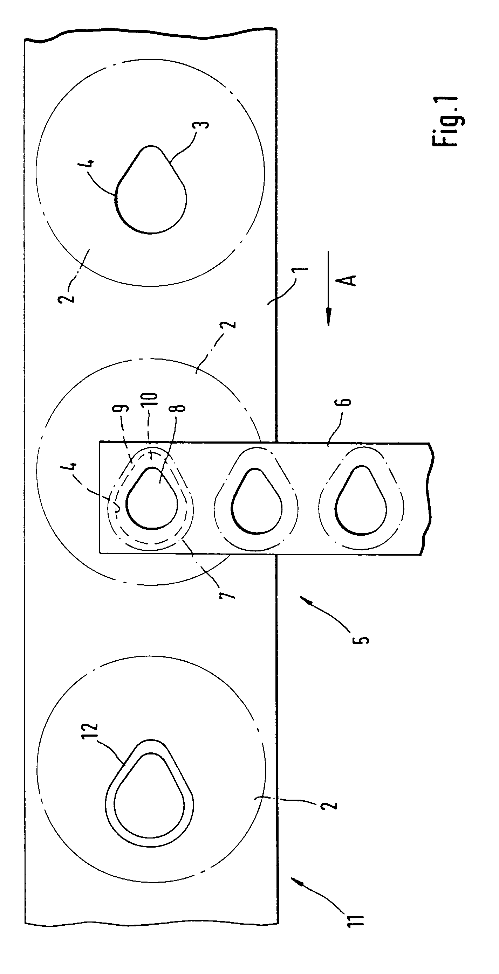

Bei dem in Figur 1 dargestellten Verfahren wird ein Band 1 aus beschichtetem Karton von einer nicht dargestellten Rolle abgewickelt und in Richtung des Pfeils A zu einer ersten Arbeitsstation 5 geführt. Das Band 1 besitzt eine Vielzahl von hintereinander angeordneten, strichpunktiert dargestellten Abschnitten, die jeweils einer Wand 2 für einen später herzustellenden Behälter entsprechen. Jede Wand 2 des Bandes 1 ist mit einer öffnung 3 versehen, deren Kante 4 mit einem Schutzbezug 12 versehen werden soll. Nach dem weiter unten noch zu beschreibenden Anbringen des Schutzbezuges 12 wird das Band 1 auf eine nicht dargestellte Rolle aufgewickelt, die einer Maschine zum Herstellen von Dosen vorgelegt werden soll.

Zum Herstellen der Dosen werden die mit dem Schutzbezug 12 versehenen Wände 2 entlang der strichpunktierten Linie ausgestanzt und zu Deckeln für die Dosen weiterverarbeitet. Dies ist hier nicht beschrieben.

Der genannten Arbeitsstation 5 wird des weiteren von einer nicht dargestellten Rolle eine bandförmige Folie 6 zugeführt, die vorzugsweise aus Polyäthylen besteht. Die Folie 6 enthält eine Vielzahl von Abschnitten, die jeweils einem Folienstück 7 entsprechen und entlang der strichpunktierten Linie von der bandförmigen Folie 6 abgetrennt werden können. Jedes Folienstück 7 der bandförmigen Folie 6 ist mit einer Öffnung 8 versehen, deren Kontur der Kontur der Öffnung 3 der Wand 2 entspricht. Allerdings hat die Öffnung 8 einen kleineren Querschnitt als die Öffnung 3.

Bei der Arbeitsstation 5 werden die einem Folienstück 7 entsprechenden Abschnitte der bandförmigen Folie 6 jeweils einem der Wand 2 entsprechenden Abschnitt des Bandes 1 aus Karton zugeführt. Die Abschnitte der Folie 6 und des Bandes 1 werden hierbei derart zueinander positioniert, daß eine Öffnung 8 jeweils zu einer Öffnung 3 fluchtet und ihr mit Abstand gegenüberliegt. Der derart positionierte Abschnitt einer Folie 6 wird als Folienstück 7 aus der Folie 6 herausgetrennt und gegen die Wand 2 angelegt. Da der äußere Umfang des Folienstücks 7 etwas größer und der Querschnitt der Öffnung 8 des Folienstücks 7 etwas kleiner ist als die Öffnung 3 der Wand 2, wird ein die Öffnung 3 ringförmig überlappender Abschnitt 10 und ein den Randbereich der Wand 2 überragender Randabschnitt 9 bei dem Folienstück 7 gebildet.

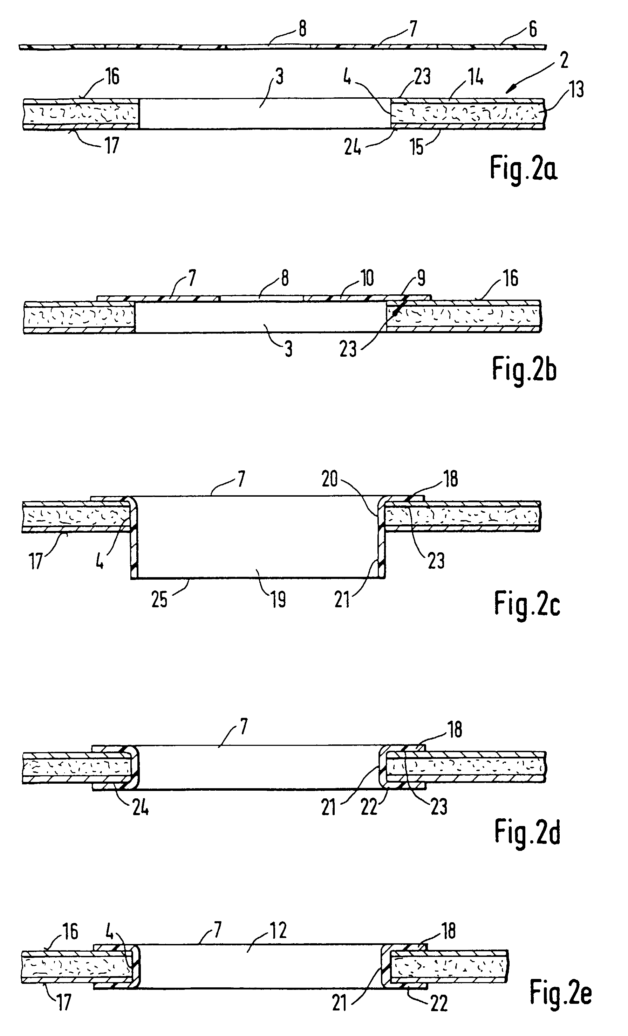

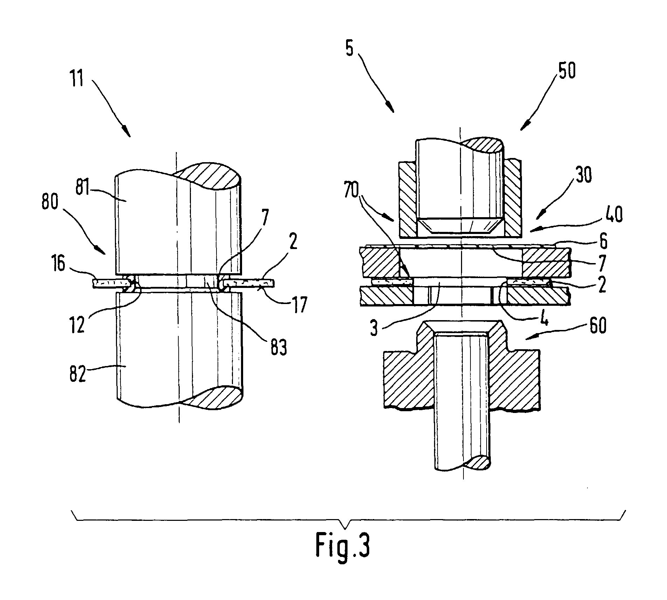

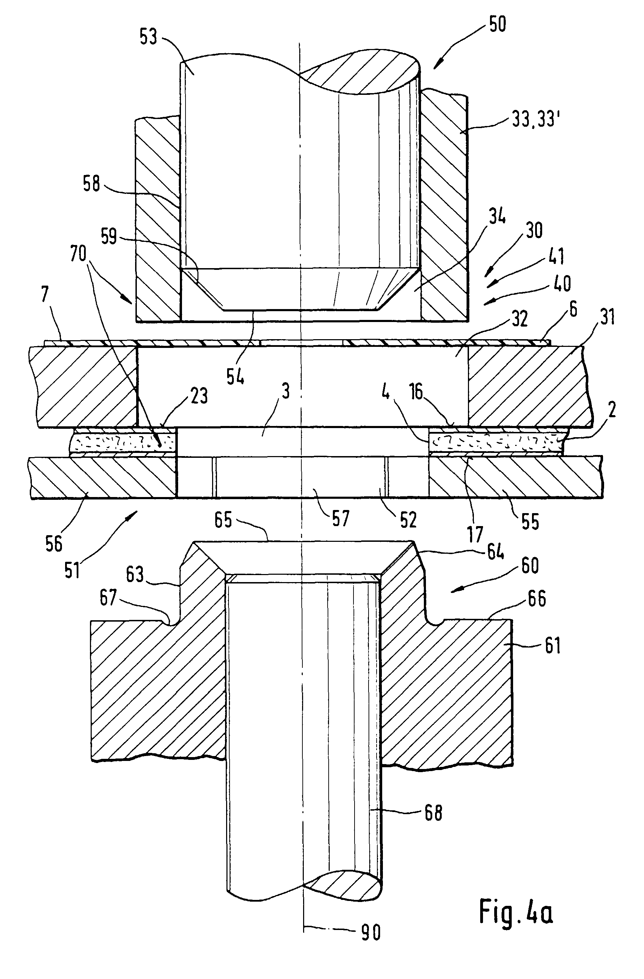

Bei der Arbeitsstation 5 wird das abgetrennte Folienstück 7 nach dem Anlegen gegen die Wand 2 derart verformt, daß es die Öffnung 3 der Wand 2 nietartig überdeckt. Die mit dem nietförmigen Folienstück 7 versehene Wand 2 wird zusammen mit dem Band 1 zu einer Arbeitsstation 11 weiterbefördert. Dort wird das inzwischen nietförmige Folienstück 7 bei der Wand 2 dauerhaft und dichtend befestigt, so daß ein nietförmiger Schutzbezug 12 gebildet wird. Die einzelnen Arbeitsschritte werden nachfolgend zu Figuren 2a bis 2e beschrieben werden. Die Herstellung und Anbringung des nietförmigen Schutzbezuges 12 kann mittels einer Vorrichtung erfolgen, deren Aufbau und Funktion in Figuren 3 und 4a bis 4d beschrieben ist.

Wie aus Figuren 2a bis 2e ersichtlich ist, enthält die zum Anbringen des Schutzbezuges 12 vorgelegte Wand 2 eine Trägerschicht 13 aus Karton und zwei Schutzschichten 14, 15, die vorzugsweise aus Polyäthylen bestehen. Die Schutzschicht 14 bildet die Oberfläche einer ersten Breitseite 16 und die Schutzschicht 15 die Oberfläche einer zweiten Breitseite 17 der Wand 2. Die Kante 4 der Öffnung 3 der Wand 2 ist nicht von einer Schutzschicht bedeckt.

Bei dem in Figur 2a dargestellten Arbeitsschritt ist die ebenfalls vorgelegte Folie 6 in die oben bereits erwähnte Position gebracht worden, bei der die Öffnungen 3 und 8 zueinander fluchten und der einem Folienstück 7 entsprechende Abschnitt der Folie 6 der ersten Breitseite 16 der Wand 2 mit Abstand gegenüberliegt.

Bei dem in Figur 2b dargestellten Arbeitsschritt wird das Folienstück 7 von der Folie 6 abgetrennt und auf die erste Breitseite 16 der Wand 2 angelegt, so daß es die Öffnung 3 und den hieran angrenzenden Randbereich 23 der Wand 2 überdeckt. Es wird hierdurch der den Randbereich 23 überdeckende Randabschnitt 9 und der die Öffnung 3 überlappende Abschnitt 10 gebildet, die oben bereits erwähnt worden sind.

Das Folienstück 7 wird nun gegen die erste Breitseite 16 der Wand 2 angedrückt.

In einem nachfolgenden, in Figur 2c dargestellten Arbeitsschritt wird der überlappende Abschnitt 10 durch die Öffnung 3 hindurch umgeformt, so daß ein bei der ersten Breitseite 16 der Wand 2 verbleibender ebener Abschnitt 18, der dem Randabschnitt 9 entspricht, und ein verformter, hülsenförmiger Abschnitt 19 gebildet werden. Der hülsenförmige Abschnitt 19 besteht hierbei aus einem die Kante 4 abdeckenden Abschnitt 20 und einem aus der Öffnung 3 herausragenden Abschnitt 21, der stirnseitig mit einer Öffnung 25 abschließt.

In einem nachfolgenden Arbeitsschritt, der in Figur 2d dargestellt ist, wird der herausragende Abschnitt 21 in Richtung zu der zweiten Breitseite 17 der Wand 2 umgeformt, so daß ein weiterer ebener Abschnitt 22 bei dem Folienstück 7 gebildet wird. Das Folienstück 7 hat nun eine nietförmige Gestalt und liegt unbefestigt im Bereich der Öffnung 3.

Bei dem in Figur 2e dargestellten Arbeitsschritt wird das nietförmige Folienstück 7 an den beiden Breitseiten 16,17 und zusätzlich an der Kante 4 durch Heißsiegeln befestigt. Das Folienstück 7 bildet nun den nietförmigen Schutzbezug 12.

Die vorstehend zu Figuren 2a bis 2d beschriebenen Arbeitsschritte werden in der ersten Arbeitsstation 5 und der zu Figur 2e beschriebene Arbeitsschritt in der zweiten Arbeitsstation 11 durchgeführt.

Die in Figur 3 dargestellte Vorrichtung besteht aus der ersten Arbeitsstation 5 und der zweiten Arbeitsstation 11.

Die Arbeitsstation 5 enthält eine Einrichtung 30 zum Abtrennen des Folienstücks 7, eine Einrichtung 40 zum Anlegen des abgetrennten Folienstücks 7, eine Einrichtung 50 zum Verformen des überlappenden Abschnitts 10 des Folienstücks 7, eine Einrichtung 60 zum Verformen des aus der Öffnung 3 herausragenden Abschnitts 21 und eine Einrichtung 70 zum Festhalten des abgetrennten Folienstücks 7. Die Arbeitsstation 5 wird unten zu Figuren 4a bis 4d im Detail beschrieben werden.

Die zweite Arbeitsstation 11 enthält eine Einrichtung 80 zum Befestigen des nietförmigen Folienstücks 7 an der Wand 2. Die Einrichtung 80 ist als Ultraschallschweißeinrichtung ausgebildet und enthält eine Sonotrode 81 sowie einen mit dieser zusammenwirkenden Amboß 82. Bei der Sonotrode 81 ist ein Einsatz 83 angebracht, dessen Kontur der Kontur der Öffnung 3 entspricht und dessen Querschnitt etwas kleiner ist als der Querschnitt der Öffnung 3. Der Einsatz 83 ragt in die Öffnung 3 hinein und füllt diese fast ganz aus.

Wie aus Figur 3 ersichtlich ist, ist der Arbeitsstation 5 eine Wand 2 vorgelegt worden, deren Öffnung 3 mit einem Folienstück 7 aus einer zugeführten Folie 6 verkleidet werden soll. In dieser Arbeitsstation 5 wird das Folienstück 7 zu der gewünschten Nietform verformt. Dies wird unten zu Figuren 4a bis 4d näher beschrieben werden.

In der Arbeitsstation 11 wird das nietartig verformte Folienstück 7 mittels der Ultraschallschweißeinrichtung an der Wand 2 befestigt. Die zum Verschweißen erforderliche Wärme wird durch die Sonotrode 81 und den mit dieser zusammenwirkenden Amboß 82 erzeugt. Die Sonotrode 81 liegt auf der ersten Breitseite 16 und der Amboß 82 auf der zweiten Breitseite 17 gegen das nietartig verformte Folienstück 7 an. Der Einsatz 83 verhindert ein Verlaufen des erhitzten Materials des Folienstücks 7 innerhalb der Öffnung 3.

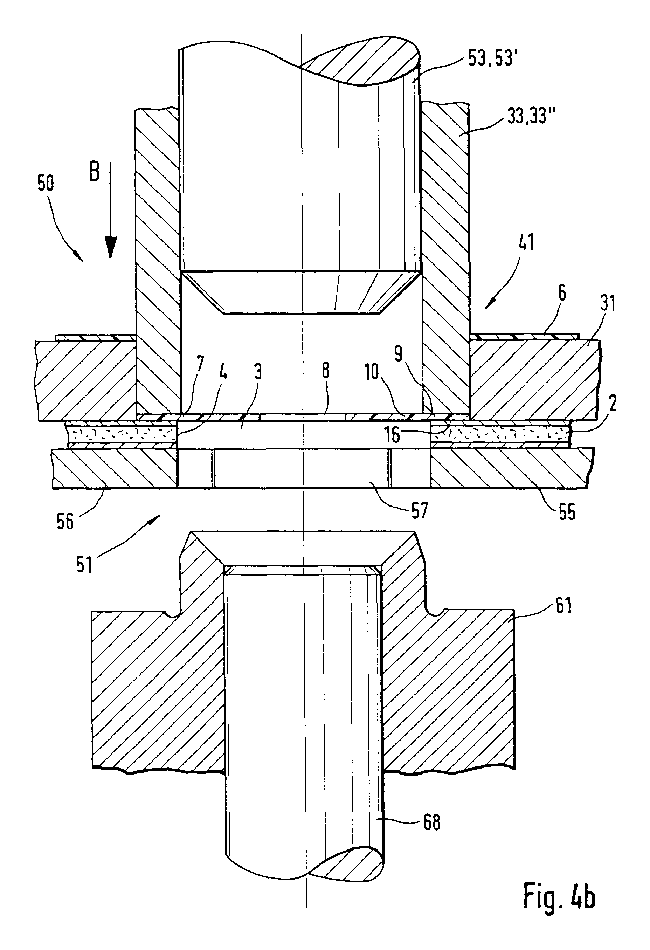

Die Figuren 4a bis 4d zeigen die zum Verformen des Folienstücks 7 eingesetzten Bauteile in unterschiedlichen Arbeitspositionen. Hierbei soll nachfolgend zunächst anhand der Figur 4a der Aufbau und die Anordnung der Bauteile und anhand der Figuren 4b bis 4d die Funktion der Bauteile beschrieben werden.

Die Einrichtung 30 zum Abtrennen enthält eine Schnittplatte 31, die eine Ausnehmung 32 enthält, deren Kontur der Kontur des abzutrennenden Folienstücks 7 entspricht. Die Ausnehmung 32 ist durch die Schnittplatte 31 hindurchgeführt. Unterhalb der Schnittplatte 31 ist die mit einem Schutzbezug 12 zu versehende Wand 2 derart positioniert, daß die Öffnung 3 genau mit der Ausnehmung 32 fluchtet. Die Querschnittsfläche der Ausnehmung 32 ist größer als die Querschnittsfläche der Öffnung 3, so daß der Randbereich 23 der Wand 2 frei liegt.

Die Einrichtung 30 enthält des weiteren einen Schnittstempel 33, dessen äußere Kontur der Kontur der Ausnehmung 32 entspricht und der in die Ausnehmung 32 hinein bis zu der Breitseite 16 der Wand 2 verfahren werden kann. Der Schnittstempel 33 hat eine hülsenformige Gestalt und enthält einen Hohlraum 34.

Die Einrichtung 40 zum Anlegen des abgetrennten Folienstücks 7 enthält eine Einrichtung 41 zum Befördern des Folienstücks 7, die durch den Schnittstempel 33 gebildet wird. Der Schnittstempel 33 kann durch die Ausnehmung 32 zu der ersten Breitseite 16 der Wand 2 geführt werden und hierbei das abgetrennte Folienstück 7 befördern. Hierbei kann die Umfangswand der Ausnehmung 32 als Führungsfläche für das Folienstück 7 während der Beförderung zu der Wand 2 dienen.

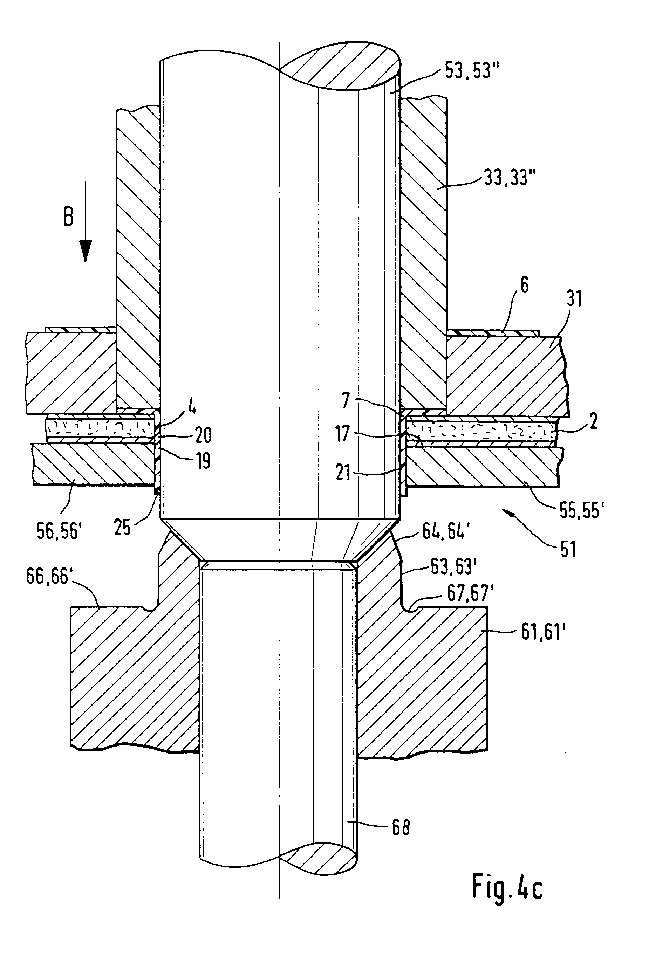

Die Einrichtung 50 zum Verformen des die Öffnung 3 der Wand 2 überlappenden Abschnitts 10 (vergleiche Figur 4b) enthält eine Stützplatte 51 (vergleiche Figur 4a) mit einer Ausnehmung 52 sowie einem Ziehstempel 53. Der Ziehstempel 53 ist innerhalb des von dem hülsenförmigen Schnittstempel 33 gebildeteten Hohlraums 34 verschiebbar und kann in die Ausnehmung 52 der Stützplatte 51 eingeführt werden. Die Kontur der Ausnehmung 52 entspricht im Querschnitt wenigstens annähernd der Kontur der Öffnung 3 der Wand 2. Die Kontur des Ziehstempels 53 entspricht im Querschnitt wenigstens annähernd der Kontur der Ausnehmung 52. Allerdings ist die Querschnittsfläche des Ziehstempels 53 geringfügig kleiner als die Querschnittsfläche der Öffnung 3 der Wand 2 und der Ausnehmung 52 der Stützplatte 51. Hierdurch wird dem in die Öffnung 3 hinein umgeformten Abschnitt 19 des Folienstücks 7 (vergleiche Figur 4c) zwischen der Kante 4 der Öffnung 3 der Wand 2 und dem Ziehstempel 53 ausreichend Platz gelassen.

Die Umfangswand des Ziehstempels 53 verläuft über einen mittleren Längenbereich 58 parallel zu der Achse 90 des Ziehstempels 53. Die Querschnittsfläche des Ziehstempels 53 ist bei seinem vorderen Ende 54 kleiner als bei seinem mittleren Längenbereich 58. In dem vorderen Längenbereich 59 des Ziehstempels 53 nimmt deshalb die Umfangswand einen zu der Achse 90 hin geneigten Verlauf. Diese Ausbildung des vorderen Längenbereichs 59 und des vorderen Endes 54 des Ziehstempels 53 ist dem umzuformenden Folienstück 7, das eine Öffnung 8 aufweist, angepaßt und erleichert das Umformen in die Öffnung 3 der Wand 2 hinein.

Die Stützplatte 51 ist in vier Teilplatten geteilt, die von der Achse 90 wegbewegt werden können. Von den vier Teilplatten der Stützplatte 51 sind nur die Teilplatten 55, 56, 57 zeichnerisch dargestellt.

Die Einrichtung 70 zum Festhalten des Folienstücks 7 wird durch den zu der ersten Breitseite 16 der Wand 2 geführten Schnittstempel 33 und die Stützplatte 51 gebildet.

Die Einrichtung 60 zum Verformen des aus der Öffnung 3 der Wand 2 herausragenden Abschnitts 21 des Folienstücks 7 enthält einen Bördelstempel 61, der in die Öffnung 3 der Wand 2 hinein verschoben werden kann und mit dem Ziehstempel 53 zusammenwirkt. Hierbei kann der Bördelstempel 61 mit seinem vorderen Ende 65 an den Ziehstempel 53 angelegt werden, so daß dieser beim Verschieben des Bördelstempels 61 in der Bewegung mitgeführt wird. Der Bördelstempel 61 ist zum Durchführen der Verschiebebewegung entlang einem Führungsdorn 68 verschiebbar.

Die äußere Kontur des Bördelstempels 61 entspricht über einen mittleren Längenbereich 63 und einen vorderen Längenbereich 64 wenigstens annähernd der Öffnung 3 der Wand 2.

Die äußere Umfangswand des Bördelstempels 61 verläuft bei dem vorderen Längenbereich 64 und dem mittleren Längenbereich 63 im wesentlichen parallel zu der Achse 90, wobei allerdings die Umfangswand in Richtung zu dem vorderen Ende 65 des Bördelstempels 61 einen zu der Achse 90 hin leicht geneigten Verlauf nimmt. An den mittleren Längenbereich 63 schließt sich in die andere Richtung eine Ringfläche 66 mit im wesentlichen radialer Richtungskomponente an.

Im mittleren Längenbereich 63 ist die Querschnittsfläche wenigstens annähernd gleichbleibend und geringfügig kleiner als die Querschnittsfläche der Öffnung 3 der Wand 2. Die Querschnittsfläche nimmt wegen des geneigten Verlaufs der Umfangswand im vorderen Längenbereich 64 in Richtung zu dem vorderen Ende 65 kontinuierlich ab und ist kleiner als die Querschnittsfläche im mittleren Längenbereich 63.

Der Bördelstempel 61 weist in dem Bereich, in dem der mittlere Längenbereich 63 zu der Ringfläche 66 mit radialer Richtungskomponente übergeht, eine Umfangsfläche 67 auf, die in der Ringfläche 66 eine ringnutartige Vertiefung bildet.

Die Funktionsweise der in Figuren 4a bis 4d dargestellten Einrichtungen ist wie folgt:

In der in Figur 4a dargestellten Arbeitsposition befindet sich der Schnittstempel 33 in einer Position 33' außerhalb der Ausnehmung 32 der Schnittplatte 31. Die Folie 6 liegt auf der Schnittplatte 31 auf. Die Wand 2 liegt auf der Stützplatte 51 auf und stützt sich auf ihr ab. Die Wand 2 und die Folie 6 nehmen die oben zu Figur 2a beschriebene Position ein.

Zum Abtrennen des Folienstücks 7 aus der Folie 6 wird der Schnittstempel 33 in Richtung des Pfeils B (vergleiche Figur 4b) bewegt, so daß er die Position 33'' einnimmt. Bei der Bewegung des Schnittstempels 33 wird das Folienstück 7 von der Folie 6 abgetrennt, sobald der Schnittstempel 33 die obere Kante der Ausnehmung 32 der Schnittplatte 31 passiert.

Der Schnittstempel 33 befördert bei der vorstehend beschriebenen Bewegung das abgetrennte Folienstück 7 innerhalb der Ausnehmung 32 bis zu der Breitseite 16 der Wand 2, so daß es in dem Randbereich 23 gegen die erste Breitseite 16 der Wand 2 anliegt. Beim Befördern des Folienstücks 7 zu der Wand 2 dient die Innenwand der Ausnehmung 32 als Führungsfläche für das Folienstück 7.

Der Schnittstempel 33 verbleibt in der Position 33'', wobei weiterhin ein leichter Druck in Richtung des Pfeils B ausgeübt wird. Das Folienstück 7 nimmt nun die in Figur 2b dargestellte Position ein und wird durch die Klemmwirkung des Schnittstempels 33 mit der Stützplatte 51, auf der sich der Schnittstempel 33 über die Wand 2 abstützt, vorübergehend festgehalten.

Der Ziehstempel 53 verbleibt bei den vorbeschriebenen Arbeitsschritten des Schnittstempels 33 in der in Figur 4b dargestellten Position 53'.

Bei dem in Figur 4c dargestellten Arbeitsschritt wird der Ziehstempel 53 in Richtung des Pfeils B in die Position 53'' verschoben. Hierdurch wird der die Öffnung 3 überlappende Abschnitt 10 (vergleiche Figur 4b) des Folienstücks 7 in die Öffnung 3 der Wand 2 hinein verformt. Das Folienstück 7 erhält hierdurch die in Figur 2c dargestellte Gestalt. Es wird also ein hülsenförmiger Abschnitt 19 gebildet, von dem ein Abschnitt 20 die Kante 4 der Öffnung 3 überdeckt und ein Abschnitt 21 aus der Öffnung 3 der Wand 2 herausragt. Der aus der Öffnung 3 der Wand 2 herausragende Abschnitt 21 liegt hierbei gegen die Innenwand der in der Stützplatte 51 vorhandenen Ausnehmung 52 (vergleiche Figur 4a) an.

Durch die Bewegung des Ziehstempels 53 in die Position 53''ist die Öffnung 8 (vergleiche Figur 4b) des Folienstücks 7 derart aufgeweitet worden, daß der umgeformte, hülsenförmige Abschnitt 19 des Folienstücks 7 eine stirnseitige Öffnung 25 bildet (vergleiche Figur 2c), deren Querschnittsfläche wenigstens annähernd der Querschnittsfläche des Ziehstempels 53 entspricht.

Bei der in Figur 4c dargestellten Arbeitsposition nehmen die Teilplatten 55,56 die Positionen 55', 56' ein, wobei auch die in Figur 4c nicht dargestellten Teilplatten entsprechende Positionen einnehmen.

Der Bördelstempel 61 einschließlich des zu ihm gehörenden vorderen Längenbereichs 64, des mittleren Längenbereichs 63, der Ringfläche 66 und der Umfangsfläche 67 nehmen die in Figur 4c dargestellten Positionen 61', 64', 63', 66', 67' ein.

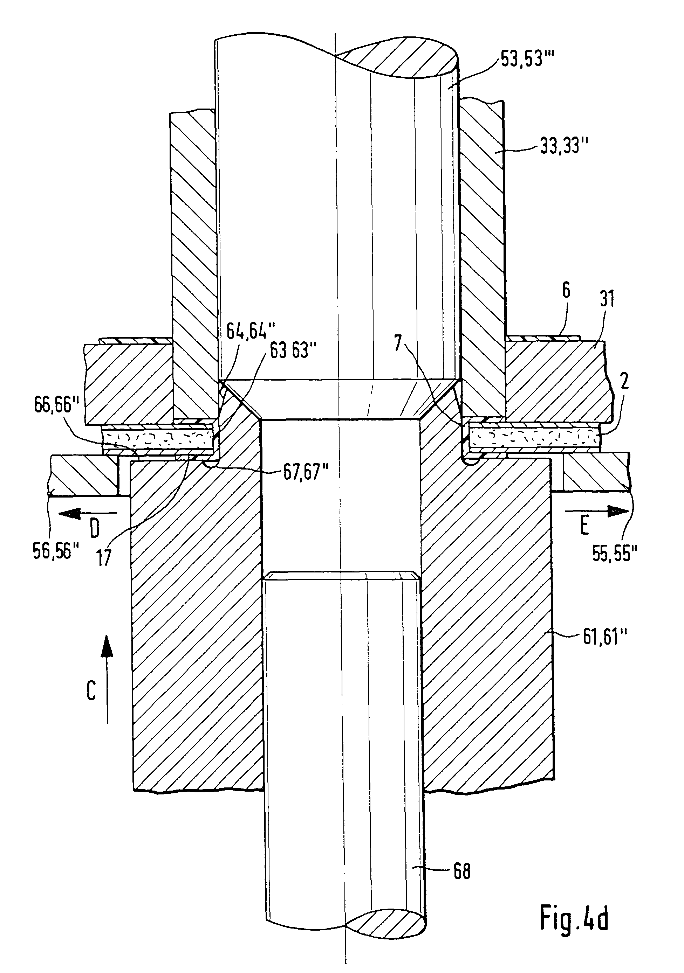

Bei dem in Figur 4d dargestellten Arbeitsschritt wird der aus der Öffnung 3 herausragende Abschnitt 21 (vergleiche Figur 4c) des Folienstücks 7 zu der zweiten Breitseite 17 der Wand 2 hin umgeformt.

Hierfür wird der Bördelstempel 61 in Richtung des Pfeils C in die in Figur 4d dargestellte Position 61'' verschoben. Bei der Verschiebebewegung des Bördelstempels 61 wird der Ziehstempel 53 mitgenommen und in die Position 53''' überführt. Die Teilplatten 55, 56 der Stützplatte 51 werden in Richtung der Pfeile E, D radial nach außen in die Positionen 55'' und 56'' bewegt, so daß der Bördelstempel 61 bei seiner Verschiebebewegung nicht behindert wird. Die nicht dargestellten Teilplatten werden ebenso wie die Teilplatten 55, 56 in entsprechender Weise radial nach außen geführt.

Während der Verschiebebewegung des Bördelstempels 61 gelangt dessen vorderer Längenbereich 64, der eine relativ kleine Querschnittsfläche hat, durch die Öffnung 25 in das Innere des hülsenförmigen Abschnitts 19 (vergleiche auch Figur 4c). Beim weiteren Verschieben des Bördelstempels 61 gelangt auch dessen mittlerer Längenbereich 63 in das Innere des hülsenförmigen Abschnitts 19. Schließlich gelangt beim weiteren Verschieben die Umfangsfläche 67 zu dem die Öffnung 25 begrenzenden Stirnrand des hülsenförmigen Abschnitts 19. Dort wird der Stirnrand des hülsenförmigen Abschnitts 19 radial nach außen umgeformt und mit Hilfe der im wesentlichen radial verlaufenden Ringfläche 66 gegen die zweite Breitseite 17 der Wand 2 angedrückt.

Die Verschiebebewegung des Bördelstempels 61 in Richtung des Pfeils C ist nun beendet. Der Bördelstempel 61, der vordere Längenbereich 64, der mittlere Längenbereich 63, die Umfangsfläche 67 und die Ringfläche 66 nehmen nun die Positionen 61'', 64'', 63'', 67'' und 66'' ein.

Das Folienstück 7 hat nun die in Figur 2d dargestellte nietförmige Gestalt.

Die mit dem nietförmigen Folienstück 7 versehene Wand 2 wird nun durch entsprechendes Zurückbewegen des Schnittstempels 33, des Ziehstempels 53 und des Bördelstempels 61 aus der Arbeitsstation 5 freigegeben und zu der Arbeitsstation 11 befördert.

In der Arbeitsstation 11 wird das nietförmige Folienstück 7, wie weiter oben schon beschrieben worden ist, durch Heißsiegeln an der Wand 2 befestigt.

## Patentansprüche

1. Vorrichtung zum Herstellung und Anbringen eines Schutzbezuges bei einer Öffnung einer Wand für einen Behälter, wobei die Kante der Öffnung und die beiden an sie angrenzenden Randbereiche der beiden Breitseiten der Wand von dem Schutzbezug nietartig überdeckt werden, wobei die Vorrichtung eine Einrichtung (40) zum Anlegen eines bogenartigen Folienstücks (7) an die erste Breitseite (16) der Wand (2), eine Einrichtung (50) zum Verformen eines die Öffnung (3) der Wand (2) überlappenden Abschnitts (10) des angelegten Folienstücks (7) durch die Öffnung (3) der Wand (2) hindurch, eine Einrichtung (60) zum Verformen eines aus der Öffnung (3) der Wand (2) bei der zweiten Breitseite (17) herausragenden Abschnitts (21) des verformten Folienstücks (7) und eine Einrichtung (80) zum dauerhaften Befestigen des zu einem nietförmigen Schutzbezug (12) verformten Folienstücks (7) aufweist, und eine Einrichtung (30) zum Abtrennen eines bogenartigen Folienstücks (7) von einer ebenen Folie (6) vorgesehen ist.

2. Vorrichtung nach Anspruch 1, dadurch gekennzeichnet, daß die Einrichtung (30) zum Abtrennen eines Folienstücks (7), die Einrichtung (40) zum Anlegen des Folienstücks (7), die Einrichtung (70) zum Festhalten des Folienstücks (7), die Einrichtung (50) zum Verformen des die Öffnung (3) der Wand (2) überlappenden Abschnitts (10) und die Einrichtung (60) zum Verformen des aus der Öffnung (3) der Wand (2) herausragenden Abschnitts (21) bei einer Arbeitsstation (5) und die Einrichtung (80) zum Befestigen des zu einem nietförmigen Schutzbezug (12) verformten Folienstücks (7) bei einer anderen Arbeitsstation (11) angeordnet ist.

3. Vorrichtung nach Anspruch 1 oder 2, dadurch gekennzeichnet, daß die Einrichtung (30) zum Abtrennen eines Folienstücks (7) eine Schnittplatte (31) mit einer der äußeren Kontur des abzutrennenden Folienstücks (7) entsprechenden Ausnehmung (32) und einen der äußeren Kontur des Folienstücks (7) entsprechenden Schnittstempel (33) enthält, der von einer Position (33') außerhalb der Schnittplatte (31) in eine Position (33") innerhalb der Ausnehmung (32) der Schnittplatte (31) verschiebbar ist.

4. Vorrichtung nach Anspruch 1 bis 3, dadurch gekennzeichnet, daß die Einrichtung (40) zum Anlegen eine Einrichtung (41) zum Befördern des Folienstücks (7) enthält.

5. Vorrichtung nach Anspruch 4, dadurch gekennzeichnet, daß die Einrichtung (41) zum Befördern durch den Schnittstempel (33) gebildet wird, der durch die Ausnehmung (32) der Schnittplatte (31) zu der ersten Breitseite (16) der Wand (2) führbar ist.

6. Vorrichtung nach Anspruch 1 bis 5, dadurch gekennzeichnet, daß die Einrichtung (50) zum Verformen des die Öffnung (3) der Wand (2) überlappenden Abschnitts (10) eine Stützplatte (51) mit einer Ausnehmung (52) enthält, deren Kontur der Kontur der Öffnung (3) der Wand (2) wenigstens annähernd entspricht und in die ein Ziehstempel (53) einführbar ist, dessen äußere Kontur der Kontur der Ausnehmung (52) wenigstens annähernd entspricht.

7. Vorrichtung nach Anspruch 6, dadurch gekennzeichnet, daß die Querschnittsfläche des Ziehstempels (53) geringfügig kleiner ist als die Querschnittsfläche der Öffnung (3) der Wand (2) und der Ausnehmung (52) der Stützplatte (51).

8. Vorrichtung nach Anspruch 6 oder 7, dadurch gekennzeichnet, daß der Ziehstempel (53) bei seinem vorderen Ende (54) eine verringerte Querschnittsfläche aufweist.

9. Vorrichtung nach Anspruch 6 bis 8, dadurch gekennzeichnet, daß das vordere Ende (54) des Ziehstempels (53) einer in dem Folienstück (7) angeordneten Öffnung (8) angepaßt ist.

10. Vorrichtung nach Anspruch 6 bis 9, dadurch gekennzeichnet, daß die Einrichtung (70) zum Festhalten des Folienstücks (7) durch den zu der ersten Breitseite (16) der Wand (2) geführten Schnittstempel (33) und die Stützplatte (51) gebildet ist.

11. Vorrichtung nach Anspruch 1 bis 10, dadurch gekennzeichnet, daß die Einrichtung (60) zum Verformen des aus der Öffnung (3) der Wand (2) herausragenden Abschnitts (21) des Folienstücks (7) einen Bördelstempel (61) enthält, der in eine Öffnung (25) des genannten Abschnitts (21) des Folienstücks (7) hinein verschiebbar ist und dessen äußere Kontur derart ausgebildet ist, daß der genannte herausragende Abschnitt (21) bei dem Verschieben des Bördelstempels (62) aufgeweitet und zu der zweiten Breitseite (17) umgeformt wird.

12. Vorrichtung nach Anspruch 11, dadurch gekennzeichnet, daß der Bördelstempel (61) an den Ziehstempel (53) anlegbar ist, so daß dieser beim Verschieben des Bördelstempels (61) in der Bewegung mitgeführt wird.

13. Vorrichtung nach Anspruch 10 oder 11, dadurch gekennzeichnet, daß die äußere Kontur des Bördelstempels (61) über einen Längenbereich (63, 64) wenigstens annähernd der Kontur der Öffnuung (3) der Wand (2) entspricht.

14. Vorrichtung nach Anspruch 11 bis 13, dadurch gekennzeichnet, daß der Bördelstempel (61) einen mit seinem vorderen Ende (65) beginnenden, im wesentlichen axial verlaufenden Längenbereich (63, 64) und eine sich hieran nach außen anschließende Ringfläche (66) mit im wesentlichen radialer Richtungskomponente aufweist.

15. Vorrichtung nach Anspruch 11 bis 14, dadurch gekennzeichnet, daß der Bördelstempel (61) wenigstens in einem mittleren Längenbereich (63) eine annähernd gleichbleibende Querschnittsfläche aufweist, die geringfügig kleiner ist als die Querschnittsfläche der Öffnung (3) der Wand (2).

16. Vorrichtung nach Anspruch 15, dadurch gekennzeichnet, daß sich an den mittleren Längenbereich (63) des Bördelstempels (61) ein vorderer Längenbereich (64) mit sich zum vorderen Ende (65) des Bördelstempels (61) hin verjüngender Querschnittsfläche anschließt.

17. Vorrichtung nach Anspruch 14 bis 16, dadurch gekennzeichnet, daß die Ringfläche (66) im Bereich des Übergangs zu dem im wesentlichen axial verlaufenden Längenbereich (63, 64) eine ringnutartig vertiefte Umfangsfläche (67) bildet.

18. Vorrichtung nach Anspruch 6 bis 17, dadurch gekennzeichnet, daß die Stützplatte (51) aus mehreren Teilstücken (55, 56, 57) gebildet wird, die in radialer Richtung (D,E) der Ausnehmung (52) der Stützplatte (51) vor dem Zentrum der Ausnehmung (52) wegbewegbar sind.

19. Vorrichtung nach Anspruch 3 bis 18, dadurch gekennzeichnet, daß der Schnittstempel (33) als Hülse ausgebildet ist, in deren Hohlraum (34) der Ziehstempel (53) frei beweglich angeordnet ist.

## Claims

1. Device for making and attaching a protecting cladding at an opening in the wall of a container, where the edge of the opening and the two adjacent marginal portions of the two broad sides of the wall are covered by the protecting cladding in the way of a rivet, the device comprising means (40) for applying a sheet-like piece of film (7) to the first broad side (16) of the wall (2), means (50) for shaping a section (10) of the applied piece of film (7) that overlaps the opening (3) in the wall (2), through the opening (3) in the wall (2), means (60) for shaping a section (21) of the shaped piece of film (7) that projects from the opening (3) in the wall (2) at the second broad side (17), means (80) for permanently attaching the piece of film (7), formed into a rivet-like protecting cladding (12), and means (30) for cutting off a sheet-like piece of film (7) from a plane film (6).

2. The device as defined in Claim 1, wherein the means (30) for cutting off a piece of film (7), the means (40) for applying the piece of film (7), the means (70) for retaining the piece of film (7), the means (50) for shaping the section (10) overlapping the opening (3) in the wall (2), and the means (60) for shaping the section (21) projecting from the opening (3) in the wall (2) are arranged at a working station (5), and the means (80) for attaching the piece of film (7), that has been formed into a rivet-like protective cladding (12), are arranged at a different working station (11).

3. The device as defined in Claim 1 of Claim 2, wherein the means (30) for cutting off a piece of film (7) comprises a die-plate (31) with a recess (32) corresponding to the outer contour of the piece of film (7) to be cut off, and a punch (33) corresponding to the outer contour of the piece of film (7), that can be moved from a position (33') outside the die-plate (31) into a position (33) inside the recess (32) of the die-plate (31).

4. The device as defined in Claims 1 to 3, wherein the applying means (40) comprise means (41) for conveying the piece of film (7).

5. The device as defined in Claim 4, wherein the conveying means (41) is formed by the punch (33), that can be guided through the recess (32) in the die-plate (31) to the first broad side (16) of the wall (2).

6. The device as defined in Claims 1 to 5, wherein the means (50) for shaping the section (10) overlapping the opening (3) in the wall (2) comprises a back-up plate (51) with a recess (52) whose contour corresponds at least approximately to the contour of the opening (3) in the wall (2) and into which a drawing die (53) can be introduced whose outer contour corresponds at least approximately to the contour of the recess (52).

7. The device as defined in 6, wherein the cross-sectional area of the drawing die (53) is slightly smaller than the cross-sectional area of the opening (3) in the wall (2) and the recess (52) of the back-up plate (51).

8. The device as defined in Claim 6 or Claim 7, wherein the cross-sectional area of the drawing die (53) is slightly reduced at its forward end (54).

9. The device as defined in Claims 6 to 8, wherein the forward end (54) of the drawing die (53) is adapted to an opening (8) arranged in the piece of film (7).

10. The device as defined in Claims 6 to 9, wherein the means 70 for retaining the piece of film (7) is constituted by the punch (33), moved to the first broad side (16) of the wall (2), and the back-up plate (51).

11. The device as defined in Claims 1 to 10, wherein the means 60 for shaping the section (21) of the piece of film (7), that projects from the opening (3) in the wall (2), comprises a bordering die (61) that can be moved into an opening (25) in the said section (21) of the piece of film (7) and whose outer contour exhibits a shape such that the said projecting section (21) is expanded during displacement of the bordering die (61) and folded over toward the second broad side (17).

12. The device as defined in Claim 11, wherein the bordering die (61) can be applied against the drawing die (53) so that the latter follows the movement of the bordering die (61) during displacement of the latter.

13. The device as defined in Claim 10 or Claim 11, wherein the outer contour of the bordering die (61) corresponds, over a linear area (63, 34), at least approximately to the contour of the opening (3) in the wall (2).

14. The device as defined in Claims 11 to 13, wherein the bordering die (61) comprises a linear area (63, 64) starting at its forward end (65) and extending substantially in axial direction, and followed by an outwardly extending annular surface (66) with a substantially radial direction component.

15. The device as defined in Claims 11 to 14, wherein the bordering die (61) exhibits, at least over a central linear area, an approximately uniform cross-sectional area slightly smaller than the cross-sectional area of the opening (3) in the wall (2).

16. The device as defined in Claim 15, wherein the central linear area (63) of the bordering die (61) is followed by a forward linear area (64) whose cross-sectional area tapers toward the forward end (65) of the bordering die (61).

17. The device as defined in Claims 14 to 16, wherein the annular surface (66) forms a circumferential surface (67), recessed to form sort of an anjular groove, in the area of the transition to the substantially radially extending linear area (63, 64).

18. The device as defined in Claims 6 to 17, wherein the back-up plate (51) consists of a plurality of partial elements (55, 56, 57), that can be moved out of the way before the center of the recess (52), in radial direction (D, E) of the recess (52) in the back-up plate (51).

19. The device as defined in Claims 3 to 18, wherein the punch (33) is designed as a sleeve and adapted to receive the drawing die (18) in its hollow space in freely movable relationship.

## Revendications

1. Installation destinée à la fabrication et à l'application d'un revêtement de protection sur un trou réalisé dans une paroi pour boîte, le bord du trou et les deux zones de bordure attenantes des deux cotés plats de la paroi étant recouverts à la manière d'un rivet par le revêtement de protection en forme de rivet, dans laquelle installation il est prévu un dispositif (40) destiné à appliquer un morceau de feuille (7) de forme courbe sur le premier côté plat (16) de la paroi (2), un dispositif (50) destiné à former en poussant à travers le trou (3) de la paroi (2) de la section de recouvrement (10) une partie du morceau de feuille (7) appliqué qui recouvre le trou (3) de la paroi (2), un dispositif (60) destiné à rabattre contre le deuxième côté plat (17) une partie (21) du morceau de feuille (7) formé qui s'avance en saillie hors du trou (3) de la paroi (2), et un dispositif (80) destiné à fixer de manière non démontable le morceau de feuille (7) formé pour obtenir un revêtement de protection (12) en forme de rivet et un dispositif (30) destiné à découper un morceau de feuille (7) de forme courbe dans une feuille plane (6).

2. Installation selon la revendication 1, caractérisée en ce que le dispositif (30) destiné à découper un morceau de feuille (7), le dispositif (40) destiné à appliquer le morceau de feuille (7), le dispositif (70) destiné à bloquer le morceau de feuille (7), le dispositif (50) destiné au formage de la partie (10) qui recouvre le trou (3) de la paroi (2) et le dispositif (60) destiné au formage de la partie (21) qui s'avance en saillie hors du trou (3) de la paroi (2) sont montés dans une station de travail (5) et le dispositif (80) destiné à fixer le morceau de feuille (7) formé pour obtenir un revêtement de protection (12) en forme de rivet est monté dans une autre station de travail (11).

3. Installation selon la revendication 1 ou 2, caractérisée en ce que le dispositif (30) destiné à découper un morceau de feuille (7) comprend un plateau de coupe (31), muni d'un évidement (32) correspondant au contour extérieur du morceau de feuille (7) à découper, et un poinçon de coupe (33), qui correspond au contour extérieur du morceau de feuille (7) et qui peut se déplacer d'une position (33') en dehors du plateau de coupe (31) vers une position (33'') à l'intérieur de l'évidement (32) réalisé dans le plateau de coupe (31).

4. Installation selon l'une quelconque des revendications 1 à 3, caractérisée en ce que le dispositif (40) destiné à appliquer le revêtement comporte un dispositif (41) destiné à transporter le morceau de feuille (7).

5. Installation selon la revendication 4, caractérisée en ce que le dispositif (41) destiné à transporter est formé par le poinçon de coupe (33) qui peut être guidé à travers l'évidement (32) du plateau de coupe (31) vers le premier côté plat (16) de la paroi (2).

6. Installation selon l'une quelconque des revendications 1 à 5, caractérisée en ce que le dispositif (50) destiné au formage de la partie (10) qui recouvre le trou (3) de la paroi (2) comprend une plaque de support (51) munie d'un évidement (52), dont le contour correspond au moins approximativement au contour du trou (3) de la paroi (2) et dans lequel il est possible de guider un poinçon d'emboutissage (53), dont le contour extérieur correspond au moins approximativement au contour de l'évidement (52).

7. Installation selon la revendication 6, caractérisée en ce que la surface de la section du poinçon d'emboutissage (53) est légèrement plus petite que la surface de la section du trou (3) de la paroi (2) et de l'évidement (52) de la plaque de support (51).

8. Installation selon la revendication 6 ou 7, caractérisée en ce que la surface de la section du poinçon d'emboutissage (53) se rétrécit dans son extrémité antérieure (54).

9. Installation selon l'une quelconque des revendications 6 à 8, caractérisée en ce que l'extrémité antérieure (54) du poinçon d'emboutissage (53) est adaptée à un trou (8) réalisé dans le morceau de feuille (7).

10. Installation selon l'une quelconque des revendications 6 à 9, caractérisée en ce que le dispositif (70) destiné à bloquer le morceau de feuille (7) est formé par le poinçon de coupe (33), guidé vers le premier côté plat (16) de la paroi (2), et par le plateau de coupe (51).

11. Installation selon l'une quelconque des revendications 1 à 10, caractérisée en ce que le dispositif (60) destiné au formage de la partie (21) du morceau de feuille (7) qui s'avance en saillie hors du trou (3) de la paroi (2) comprend un poinçon de sertissage (61), qui peut se déplacer à l'intérieur d'un orifice (25) de la partie (21) mentionnée du morceau de feuille (7) et dont le contour extérieur est conçu de telle sorte que la partie (21) en saillie mentionnée est élargie pendant le mouvement du poinçon de sertissage (62) et rabattue vers le deuxième côté plat (17).

12. Installation selon la revendication 11, caractérisée en ce que le poinçon de sertissage (61) peut venir en appui contre le poinçon d'emboutissage (53), de telle sorte que celui-ci soit guidé avec le déplacement du poinçon de sertissage (61).

13. Installation selon la revendication 10 ou 11, caractérisée en ce que le contour extérieur du poinçon de sertissage (61), dans une zone longitudinale, correspond au moins approximativement au contour du trou (3) de la paroi (2).

14. Installation selon l'une quelconque des revendications 11 à 13, caractérisée en ce que le poinçon de sertissage (61) comporte une zone longitudinale (63, 64) qui s'étend sensiblement dans le sens axial depuis son extrémité antérieure (65) et une surface annulaire (66) attenante orientée vers l'extérieur avec des composantes de direction sensiblement radiales.

15. Installation selon l'une quelconque des revendications 11 à 14, caractérisée en ce que le poinçon de sertissage (61) comporte, au moins dans une zone longitudinale centrale (63), une surface de la section pratiquement uniforme, qui est légèrement plus petite que la surface de la section du trou (3) de la paroi (2).

16. Installation selon la revendication 15, caractérisée en ce que la zone longitudinale centrale (63) du poinçon de sertissage (61) se prolonge par une zone longitudinale antérieure (64) dont la surface de la section se rétrécit vers l'extrémité antérieure (65) du poinçon de sertissage (61).

17. Installation selon l'une quelconque des revendications 14 à 16, caractérisée en ce que la surface annulaire (66), dans la zone de transition avec la zone longitudinale (63, 64) qui s'étend sensiblement dans le sens axial, forme une surface périphérique (67) creusée en forme de rainure.

18. Installation selon l'une quelconque des revendications 6 à 17, caractérisée en ce que la plaque de support (51) est formée par plusieurs plaques partielles (55, 56, 57) qui peuvent se déplacer dans le sens radial (D, E) de l'évidement (52) de la plaque de support (51) en s'écartant du centre de l'évidement (52).

19. Installation selon l'une quelconque des revendications 3 à 18, caractérisée en ce que le poinçon de coupe (33) est conçu en forme de douille avec un volume intérieur creux (34), dans lequel le poinçon d'emboutissage (53) peut se déplacer librement.
